# EUROPEAN PATENT APPLICATION

(11) **EP 4 117 328 A1**
(43) Date of publication of application: **11.01.2023**
(21) Application number: 21901674.8
(22) Date of filing: 25.05.2021
(51) Int. Cl.: H04W 12/06, H04W 12/30, G06F 21/34, H04W 12/47, H04W 12/12, H04L 9/40, G06K 19/10, G06K 19/14

(54) **AUTHENTICATION SYSTEM, AUTHENTICATION METHOD, AND PROGRAM**

(71) Applicant: Rakuten Group, Inc., Setagaya-ku Tokyo 158-0094 (JP)
(72) Inventor: NAMURA, Teruyoshi, Tokyo 1080075 (JP); INOUE, Reiko, Tokyo 1080075 (JP); SHIROKI, Akiko, Tokyo 1080075 (JP)
(74) Representative: Hoffmann Eitle
(86) International application number: PCT/JP2021/019842
(87) International publication number: WO 2022/249294

(57) **Abstract**

Logged-in user information acquisition means (101, 201) of an authentication system (S) acquires logged-in user information that enables identification of a user who has logged in from a user terminal (30). Input card information acquisition means (102) acquires input card information relating to a card possessed by the user, which has been input from the user terminal (30) through use of reading means (33A) or photographing means (36). Authentication means (103) executes authentication based on the logged-in user information and the input card information, and on registered user information and registered card information that are registered in advance.

## Description

### Technical Field

The present disclosure relates to an authentication system, an authentication method, and a program.

### Background Art

Hitherto, in order to prevent a malicious third party from committing a fraud, there has been known a technology relating to possession authentication utilizing a card possessed by a user. For example, in Patent Literature 1, there is described a technology for executing authentication by determining whether or not card face information obtained from an image obtained by photographing a card face of a card and card information obtained from magnetism or an electric circuit of the card match. The card face information, for example, a graphic form or a hologram, which cannot be directly compared to the card information, is converted into information that can be compared to the card information, and is compared thereto.

### Citation List

### Patent Literature

[PTL 1] JP 2019-071006 A

### Summary of Invention

### Technical Problem

However, with the technology of Patent Literature 1, the authentication is executed by comparing two pieces of information obtained from the card to each other, and hence the authentication is completed based only on the information included in the card. For that reason, when a malicious third party forges a card with fraudulently obtained card information printed on a card face thereof and embeds the card information in a magnetic portion or an electric circuit of the forged card, the authentication is completed based only on the information in the forged card, and a fraud cannot be detected. As a result, with the technology of Patent Literature 1, it has not been possible to sufficiently improve security in possession authentication.

An object of the present disclosure is to enhance security in possession authentication.

### Solution to Problem

According to one aspect of the present disclosure, there is provided an authentication system including: logged-in user information acquisition means for acquiring logged-in user information that enables identification of a user who has logged in from a user terminal; input card information acquisition means for acquiring input card information relating to a card possessed by the user, which has been input from the user terminal through use of reading means or photographing means; and authentication means for executing authentication based on the logged-in user information and the input card information, and on registered user information and registered card information that are registered in advance.

### Advantageous Effects of Invention

According to the present disclosure, the security in the possession authentication is enhanced.

### Brief Description of Drawings

FIG. 1 is a diagram for illustrating an example of an overall configuration of an authentication system.
FIG. 2 is a view for illustrating an example of a flow of registering a card in an app.
FIG. 3 is a view for illustrating an example of how an IC chip of the card is read by an NFC unit.
FIG. 4 is a view for illustrating an example of a flow of image authentication.
FIG. 5 is a view for illustrating an example of a photographed image in which the card has been captured.
FIG. 6 is a functional block diagram for illustrating an example of functions implemented by an authentication system according to a first embodiment of the present disclosure.
FIG. 7 is a table for showing a data storage example of a user database.
FIG. 8 is a table for showing a data storage example of a card database.
FIG. 9 is a flow chart for illustrating an example of processing to be executed in the first embodiment.
FIG. 10 is a functional block diagram in a second embodiment of the present disclosure.
FIG. 11 is a flow chart for illustrating an example of processing to be executed in the second embodiment.
FIG. 12 is a functional block diagram in modification examples of the present disclosure.

### Description of Embodiments

### [1. First Embodiment]

Now, an example of an authentication system according to a first embodiment of the present disclosure is described. In the authentication system, possession authentication is executed. The possession authentication is authentication utilizing an object possessed only by a valid person. The object to be utilized for the possession authentication is not limited to a tangible object, and may be an intangible object such as electronic data. In the first embodiment, possession authentication utilizing a transportation-related IC card (hereinafter referred to simply as "card") is taken as an example. The possession authentication may hereinafter be referred to simply as "authentication."

### [1-1. Overall Configuration of Authentication System]

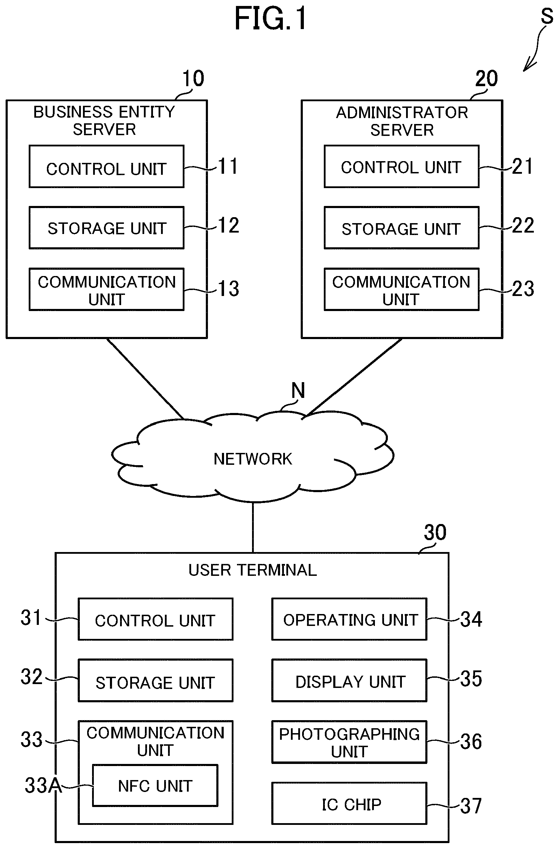

FIG. 1 is a diagram for illustrating an example of an overall configuration of the authentication system. As illustrated in FIG. 1, an authentication system S includes a business entity server 10, an administrator server 20, and a user terminal 30. Each of the business entity server 10, the administrator server 20, and the user terminal 30 can be connected to a network N such as the Internet. In FIG. 1, one business entity server 10, one administrator server 20, and one user terminal 30 are illustrated, but there may be a plurality of business entity servers 10, a plurality of administrator servers 20, and a plurality of user terminals 30.

The business entity server 10 is a server computer corresponding to a business entity that provides a service using a card. The business entity is an entity that provides a service to a user. In the first embodiment, a transportation-related service using a card is taken as an example, and hence the business entity is, for example, a railroad company or a bus company.The business entity server 10 includes a control unit 11, a storage unit 12, and a communication unit 13. The control unit 11 includes at least one processor. The storage unit 12 includes a volatile memory such as a RAM, and a nonvolatile memory such as a hard disk drive. The communication unit 13 includes at least one of a communication interface for wired communication or a communication interface for wireless communication.

The administrator server 20 is a server computer corresponding to an administrator that manages information (registered user information and registered card information, which are described later) relating to the card. In the first embodiment, a case in which the administrator is an issuer of the card is described, but the administrator is not required to be the issuer. The administrator and the business entity may be the same, or may differ from each other. The administrator server 20 includes a control unit 21, a storage unit 22, and a communication unit 23. Physical configurations of the control unit 21, the storage unit 22, and the communication unit 23 are the same as those of the control unit 11, the storage unit 12, and the communication unit 13, respectively.

The user terminal 30 is a computer to be operated by a user. For example, the user terminal 30 is a smartphone, a tablet computer, a wearable terminal, or a personal computer. The user terminal 30 includes a control unit 31, a storage unit 32, a communication unit 33, an operating unit 34, a display unit 35, a photographing unit 36, and an IC chip 37. Physical configurations of the control unit 31 and the storage unit 32 are the same as those of the control unit 11 and the storage unit 12, respectively.

The communication unit 33 includes at least one of a communication interface for wired communication or a communication interface for wireless communication. Those communication interfaces are used for connection to the network N. The communication unit 33 in the first embodiment further includes a near field communication (NFC) unit 33A. The NFC unit 33A includes a communication interface for NFC.

For NFC itself, various standards can be used, and international standards, such as ISO/IEC 18092 or ISO/IEC 21481, can be used. The NFC unit 33A includes hardware including an antenna conforming to the standards, and implements, for example, a reader/writer function, a peer-to-peer function, a card emulation function, a wireless charging function, or a combination thereof.

The operating unit 34 is an input device such as a touch panel. The display unit 35 is a liquid crystal display or an organic EL display. The photographing unit 36 includes at least one camera. The IC chip 37 is a chip that supports NFC. The IC chip 37 may be a chip of any standards, for example, a chip of FeliCa (trademark) or a chip of a so-called Type A or Type B among the non-contact type standards. The IC chip 37 includes hardware including an antenna conforming to the standards, and stores, for example, information required for a service to be used by a user.

At least one of programs or data stored in the storage units 12, 22, and 32 may be supplied thereto via the network N. Further, each of the business entity server 10, the administrator server 20, and the user terminal 30 may include at least one of a reading unit (for example, an optical disc drive or a memory card slot) for reading a computer-readable information storage medium, or an input/output unit (for example, a USB port) for inputting and outputting data to/from an external device. For example, at least one of the program or the data stored in the information storage medium may be supplied through intermediation of at least one of the reading unit or the input/output unit.

### [1-2. Outline of First Embodiment]

In the first embodiment, processing of the authentication system S is described by taking as an exemplary case in which a user registers a card in a transportation-related application (hereinafter referred to simply as "app") . The app in the first embodiment is a program for using a transportation-related service through use of the user terminal 30. The app has been downloaded and installed in the user terminal 30 in advance.

The registering of a card in the app means enabling a service equivalent to a service available through use of the card to be used from the app. In the first embodiment, once the card is registered in the app, the user can pass through an automatic ticket gate at a station by holding the user terminal 30 over the automatic ticket gate in the same manner as in a case of using the card. The same applies to a case in which the card stores transportation-related electronic money, and the electronic money can be used by holding the user terminal 30 over, for example, a POS terminal. For example, enabling use of card information from the app, associating the card information with the app, or associating the card information with a user account corresponds to the registering of the card in the app. In addition, for example, recording the card information in the business entity server 10 or the IC chip 37 corresponds to the registering of the card in the app.

The card information is information included in the card. For example, the card information includes a card number that can identify the card. The card information may include supplementary information that accompanies the card. The supplementary information is information other than the card number, for example, an expiration date of the card, a full name of the user, an issue date of the card, or an ID that can identify an IC chip included in the card. When a plurality of services can be used through use of the card, an ID used for an individual service also corresponds to the supplementary information. Not only electronically recorded information but also information written on the card face corresponds to the supplementary information.

The user account is information that can identify the user. The user account is an example of the user information. Accordingly, the user account as used herein can be read as "user information." The user information may be referred to by another name, such as "user ID" or "login ID." The user information is authentication information to be used for login to a predetermined service. At a time of login, a password or other authentication information is used as well.

In the first embodiment, it is assumed that the user finishes registering use of the app to have a user account issued. After that, in order to register the card in the app, the user performs an operation for registering the card from, for example, a menu of the app. When this operation is performed, an input screen for inputting the card information of the card to be registered in the app is displayed on the display unit 35.

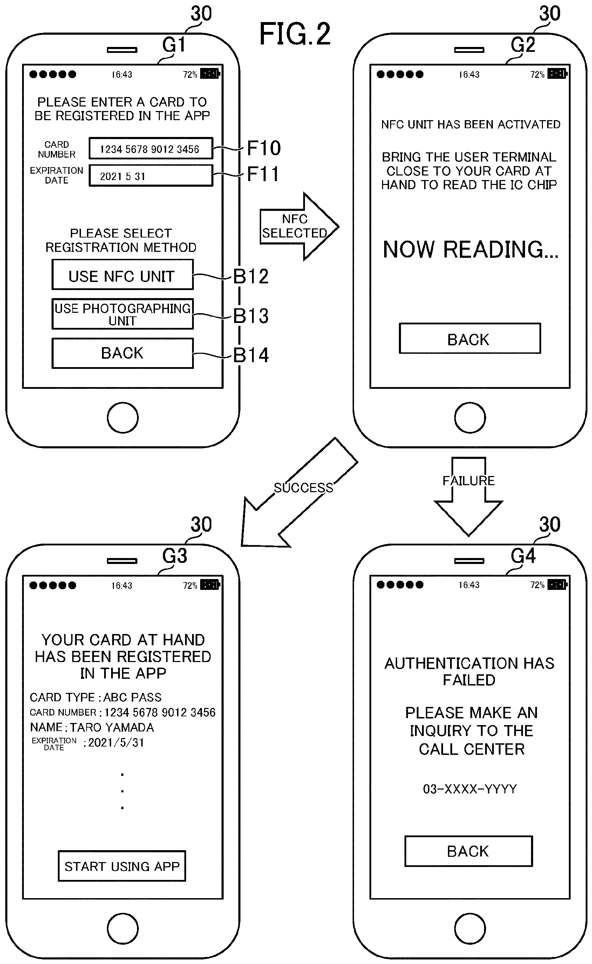

FIG. 2 is a view for illustrating an example of a flow of registering the card in the app. As illustrated in FIG. 2, on an input screen G1, an input form F10 for inputting the card number and an input form F11 for inputting the expiration date are displayed. The user examines the card number and the expiration date of the card to be registered in the app, and inputs the card number and the expiration date to the input forms F10 and F11, respectively. At a time point at which the card number and the expiration date are input, the business entity server 10 or the administrator server 20 may confirm whether or not there is a card corresponding to the input card number and expiration date.

In the first embodiment, as the authentication at a time of card registration, there are two types of authentication, that is, NFC authentication utilizing NFC and image authentication utilizing an image. The NFC authentication is authentication to be executed by causing the NFC unit 33A to read information recorded on the IC chip of the card. The image authentication is authentication to be executed by causing the photographing unit 36 to photograph the card. Those two types of authentication are hereinafter referred to simply as "authentication" unless distinguished therebetween.

The flow of FIG. 2 is a flow of the NFC authentication. When the user selects a button B12 on the input screen G1, the NFC unit 33A is activated, and a reading screen G2 for causing the NFC unit 33A to read the information recorded on the IC chip of the card is displayed on the display unit 35. The reading screen G2 may be displayed as a part of a procedure for registering the use of the app. When the reading screen G2 is displayed, the user brings the user terminal 30 close to the card.

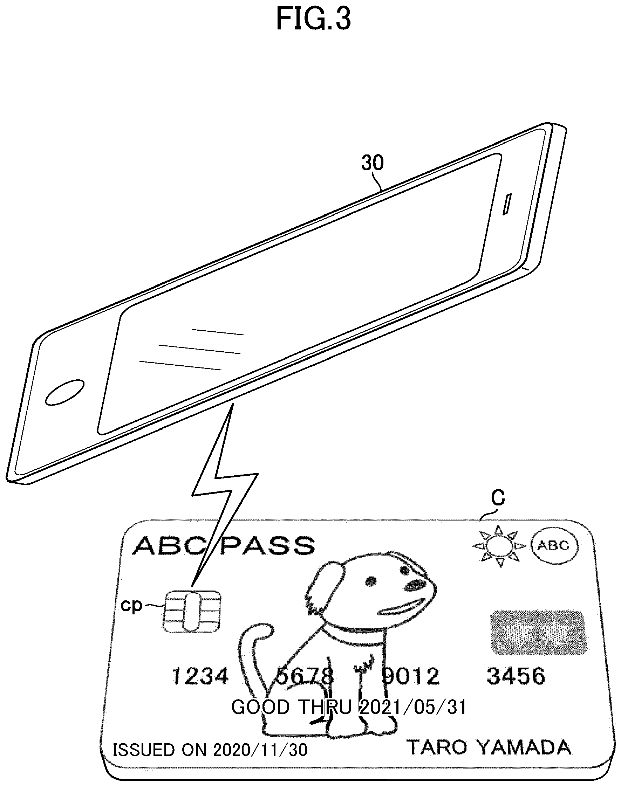

FIG. 3 is a view for illustrating an example of how the IC chip of the card is read by the NFC unit 33A. As illustrated in FIG. 3, when the user brings the user terminal 30 close to an IC chip cp of a card C, the NFC unit 33A reads the information recorded on the IC chip cp. The NFC unit 33A can read any information in the IC chip cp, but in the first embodiment, a case in which the NFC unit 33A reads an ID number recorded on the IC chip cp is described.

The ID number is information for using a predetermined service through use of the card C. The service to be used through use of the ID number may be the same as the service (in the first embodiment, transportation-related service) to be used through use of the card number, but in the first embodiment, a case in which the service to be used through use of the ID number is different from the service to be used through use of the card number is described. Accordingly, the ID number is a number for using a service different from the transportation-related service.

In the first embodiment, a fitness service is taken as an example of the service to be used through use of the ID number. The user is a member of a fitness club, and holds the card C over a reader terminal installed in the fitness club to perform an admission procedure. At that time, the ID number recorded on the IC chip cp of the card C is transmitted to the reader terminal, and authentication at a time of admission is executed by a computer in the fitness club. Accordingly, the ID number corresponds to a membership number of the fitness club.

With one card, the user can use two services, that is, the transportation-related service and the fitness service. The number of services that can be used with one card may be three or more. In this case, it is assumed that some information on each service is recorded on the IC chip cp of the card C. When the user terminal 30 reads the ID number by the NFC unit 33A, the user terminal 30 transmits the card number and expiration date input to the input forms F10 and F11 and the read ID number to the business entity server 10.

In the first embodiment, a combination of the card number, the expiration date, and the ID number corresponds to the card information, but each of the card number, the expiration date, and the ID number may correspond to the card information. That is, instead of being handled as one set of card information, those may be treated as three separate pieces of card information. The above-mentioned transmitted card number, expiration date, and ID number are input from the user terminal 30 to the business entity server 10, and thus are hereinafter referred to as "input card number," "input expiration date," and "input ID number," respectively. The input in the first embodiment means transmitting data. When described collectively, the input card number, the input expiration date, and the input ID number are referred to as "input card information."

In the first embodiment, the user account of the user and the card number, expiration date, and ID number of the issued card C are registered in the administrator server 20. The user account is information that can identify the user in a predetermined service. In the first embodiment, it is assumed that the user has a common user account for a plurality of services. The user can log in to the plurality of services through use of one user account. Accordingly, the user account for the transportation-related service and the user account for the fitness service are the same.

The user account having been used for login to the transportation-related service from the app of the user terminal 30 is hereinafter referred to as "logged-in user account." In addition, the user account, card number, expiration date, and ID number registered in the administrator server 20 are referred to as "registered user account," "registered card number," "registered expiration date," and "registered ID number," respectively. Further, when described collectively, the registered card number, the registered expiration date, and the registered ID number are referred to as "registered card information."

At a time point of reading the card C as illustrated in FIG. 3, the user has not yet registered the card C in the app, and hence in the business entity server 10, the registered user account (same as that for the fitness service) of the user is registered, but the registered card information on the user is not registered. Meanwhile, in the administrator server 20, the registered user account of the user (same as that for the transportation-related service) and the registered card information are registered.

Accordingly, when the user is a valid owner of the card C, the same pair of the registered user account and the registered card information as the pair of the logged-in user account and the input card information is registered in the administrator server 20. In the first embodiment, the administrator server 20 confirms whether or not the same pair is present, to thereby determine whether or not the user is a valid owner of the card C.

When the business entity server 10 receives a result of the confirmation that indicates that the above-mentioned pair is present, the business entity server 10 determines that the user is a valid owner, and the authentication is successful. In this case, as illustrated in FIG. 2, a success screen G3 indicating that the authentication is successful and the registration has been completed is displayed on the user terminal 30. From then on, the user can use, from the app, the same service as that available when the physical card C is used.

Meanwhile, when the business entity server 10 receives a result of the confirmation that indicates that the above-mentioned pair is not present, the business entity server 10 determines that the user is not a valid owner, and the authentication fails. In this case, as illustrated in FIG. 2, a failure screen G4 indicating that the authentication fails and the registration has not been completed is displayed on the user terminal 30. The user returns to the reading screen G2 to read the card C again, and performs an inquiry to a call center. The above-mentioned flow is a flow of the NFC authentication.

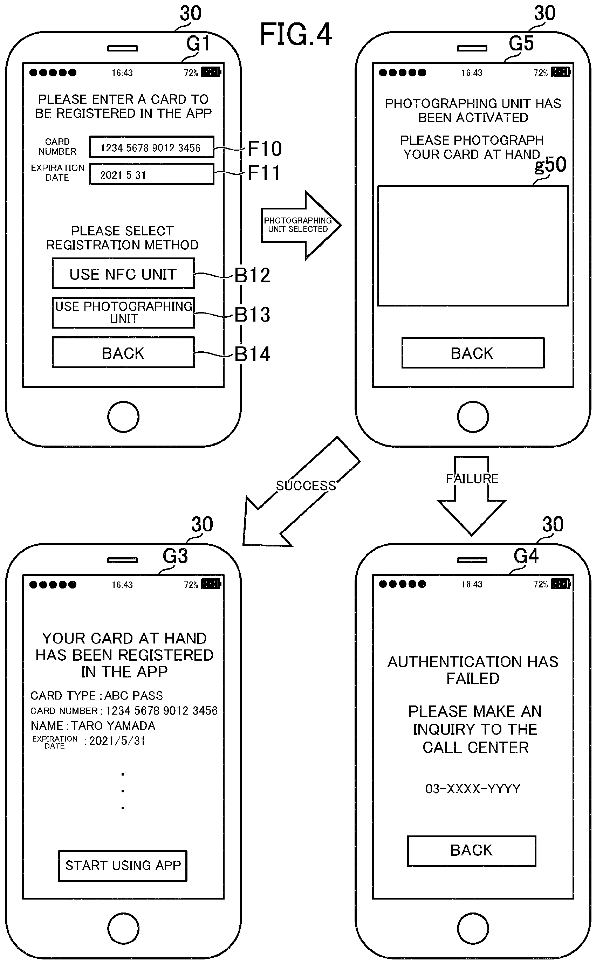

Next, a flow of the image authentication is described. FIG. 4 is a view for illustrating an example of the flow of the image authentication. As illustrated in FIG. 4, when the user selects a button B13 on the input screen G1, the photographing unit 36 is activated, and a photographing screen G5 for causing the photographing unit 36 to photograph the card C is displayed on the display unit 35. The photographing screen G5 may be displayed as a part of a procedure for registering the use of the app.

On the photographing screen G5, photographed images continuously acquired by the photographing unit 36 are displayed. A guide g50 for showing a guide to a positional relationship between the photographing unit 36 and the card is displayed over the photographed image. In the first embodiment, it is demanded that the card C be photographed from the front in a predetermined size. For example, the user places the card C on a desk, and photographs the card C so that edges of the card C fit the guide g50. The user may photograph the card C with the user terminal 30 turned sideways.

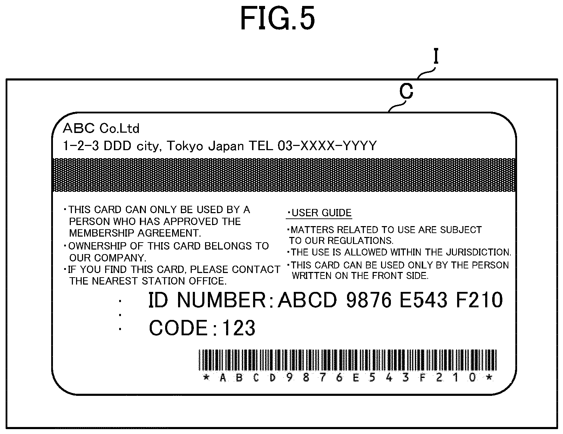

FIG. 5 is a view for illustrating an example of a photographed image in which the card C has been captured. As illustrated in FIG. 5, in the first embodiment, a case in which the user photographs the back side of the card C is described. Various kinds of information included in the back side of the card C are captured in a photographed image I. The above-mentioned information includes an input ID number in the lower right of the back side of the card C. The user terminal 30 executes optical character recognition on the photographed image I to acquire the input ID number. The flow after the business entity server 10 has received the input card information is the same as that of the NFC authentication. The optical character recognition may be executed by the business entity server 10 or the administrator server 20.

In a case of the image authentication, the input ID number may be acquired through use of the code information instead of the optical character recognition. In the example of FIG. 5, a case in which the input ID number is indicated by a bar code is described, but a two-dimensional code or other code information may be used. In another case, the code written on the back side of the card C may be used for the authentication instead of the input ID number. This code is hereinafter referred to as "input code." It is assumed that a registered code, which is a code to be used as a correct answer, is registered in the administrator server 20. In this case as well, the input code may be acquired by executing the optical character recognition on the photographed image I, and the image authentication may be executed by determining whether or not the input code matches the registered code registered in advance in the administrator server 20. For example, the image authentication may be used when reading by the NFC unit 33A results in an error, when the card C does not support the NFC authentication, or when the user terminal 30 of the user does not include the NFC unit 33A. In those cases, the authentication may be executed by having the user manually input the input ID number or the input code. In another case, the input code may also be acquired through use of the code information, such as a bar code or a two-dimensional code.

As described above, in the authentication system S, the NFC authentication or the image authentication are executed, and thus, a malicious third party who attempts to register the fraudulently obtained card information in the app cannot succeed in the NFC authentication or the image authentication because the malicious third party cannot acquire the input ID number through use of the NFC unit 33A or the photographing unit 36 and cannot obtain the logged-in user account of the valid user. This enhances the security in possession authentication. Now, details of this technology are described.

### [1-3. Functions implemented in First Embodiment]

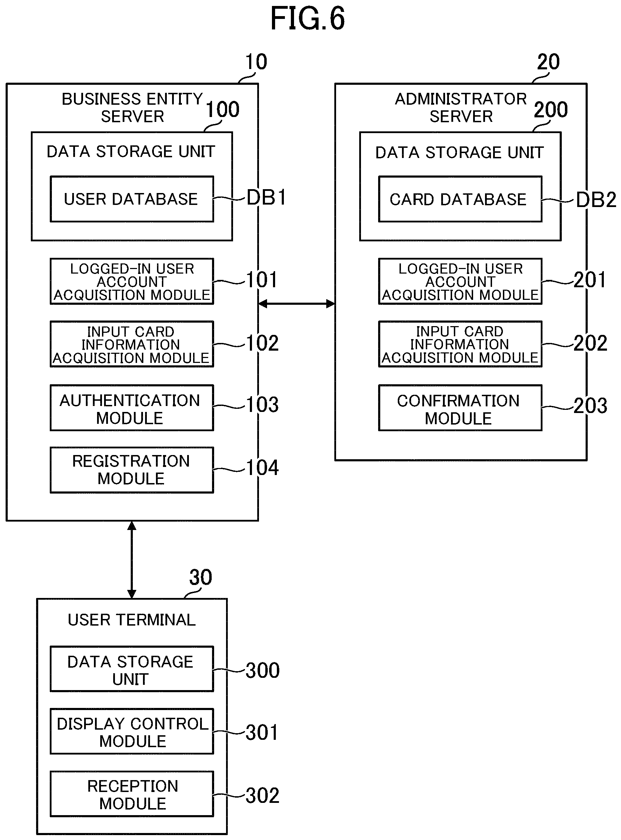

FIG. 6 is a functional block diagram for illustrating an example of functions implemented by the authentication system S according to the first embodiment. In this case, the functions implemented by each of the business entity server 10, the administrator server 20, and the user terminal 30 are described.

### [1-3-1. Functions implemented on Business Entity Server]

As illustrated in FIG. 6, on the business entity server 10, a data storage unit 100, a logged-in user account acquisition module 101, an input card information acquisition module 102, an authentication module 103, and a registration module 104 are implemented. The data storage unit 100 is implemented mainly by the storage unit 12. Each of the other functions is mainly implemented by the control unit 11.

### [Data Storage Unit]

The data storage unit 100 stores the data required for authentication. For example, a user database DB1 is described for the data storage unit 100.

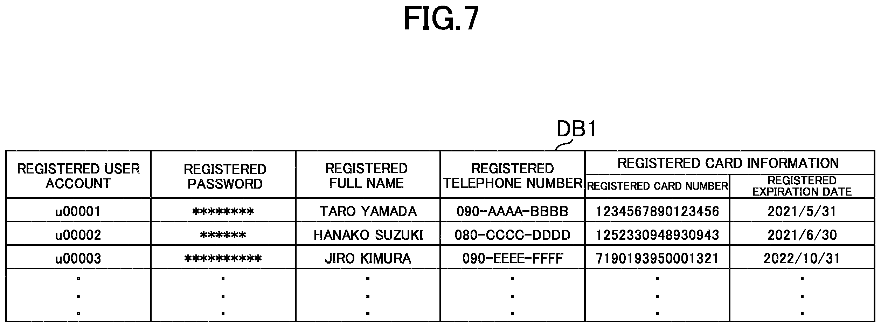

FIG. 7 is a table for showing a data storage example of the user database DB1. As shown in FIG. 7, the user database DB1 is a database in which information relating to users in a transportation-related service is stored. For example, the user database DB1 stores a registered user account, a registered password, a registered full name, a registered telephone number, and registered card information of the card C registered in the app. When a user has registered the use of the transportation-related service, a new record is created in the user database DB1. In this record, a user account issued at a time of the registration of the use is stored as the registered user account, and the password, full name, and telephone number designated at the time of the registration of the use are also stored as the registered password, registered name, and registered telephone number, respectively.

In the first embodiment, a case in which the registered card information is registered after registration of the use of the transportation-related service has been completed is described, but the registered card information may be registered at a time of the registration of the use of the transportation-related service. The registered card information stored in the user database DB1 is card information of the card C registered in the app. The number of cards C that can be registered in the app is not limited to one, and a plurality of cards may be registered in the app. In the first embodiment, at a time point at which the authentication of a certain card C is executed, the registered card information of this card C is not present in the user database DB1, and hence the registered card information in a card database DB2, which is described later, is used for the authentication.

The registered card information stored in the user database DB1 is only required to include minimum information for providing the transportation-related service. That is, not all pieces of information of the card C are required to be stored in the user database DB1. The card information stored in the user database DB1 may be only the card number, or may include information (for example, a security code or a password in so-called 3-D Secure) other than the information shown in FIG. 7. The details of the registered card information are shown as they are in FIG. 7, but the registered card information may be hashed.

### [Logged-in User Account Acquisition Module]

The logged-in user account acquisition module 101 acquires a logged-in user account that can identify a user who has logged in from the user terminal 30. As a method itself of acquiring the logged-in user account, various publicly known methods can be used. For example, when the logged-in user account acquisition module 101 requests the user to input the user account at the time of login, the logged-in user account acquisition module 101 acquires the user account input by the user. For example, when the user terminal 30 stores information (for example, cookie or temporary authentication information generated by the business entity server 10) for maintaining a logged-in state, the logged-in user account acquisition module 101 may acquire the logged-in user account based on this information.

In the first embodiment, the logged-in user account is information to be used for login to the transportation-related service. The transportation-related service is an example of a first service. Accordingly, the transportation-related service as used herein can be read as "first service." The first service is a service different from a second service. The fitness service is an example of the second service. Accordingly, the fitness service as used herein can be read as "second service." The second service is a service for which the registered user account and registered card information to be used as correct answers at the time of the authentication are registered. Any combination of services can be adopted as the first service and the second service. Examples of other services are described in modification examples of the present disclosure described later.

### [Input Card Information Acquisition Module]

The input card information acquisition module 102 uses the NFC unit 33A or the photographing unit 36 to acquire the input card information relating to the card C possessed by the user, which has been input from the user terminal 30. All pieces of information included in the input card information may be acquired through use of the NFC unit 33A or the photographing unit 36, but in the first embodiment, it is assumed that a part of information (input ID number) included in the input card information is acquired through use of the NFC unit 33A or the photographing unit 36.

The NFC unit 33A is an example of a reading unit. The reading unit is a reader for reading information recorded on an external information storage medium. The reading unit may be a reader for reading the information optically or magnetically instead of reading the information through use of wireless communication as in the first embodiment. To use the wireless communication, it is possible to use other standards such as RFID, instead of NFC. It suffices that the reading unit has at least a reader function, and the reading unit is not required to have a writer function.

The input card information is information input at a time of authentication. The input card information corresponds to a query at the time of the authentication. The input card information may have any format. For example, the input card information may be characters, numerals, or a combination thereof. In addition, for example, the photographed image may correspond to the input card information. It suffices that the input card information is information that can be detected by the NFC unit 33A or the photographing unit 36. The information recorded on the IC chip of the card C or the information formed on the surface of the card C may correspond to the input card information. The formation is not limited to printing an image of, for example, characters, and also means that the formation includes an embossing process for providing an uneven shape.

In the first embodiment, the input card information includes the input card number, the input expiration date, and the input ID number. The input card information is not limited to the example of the first embodiment. The input card information may include only a single piece of information. For example, only the input card number may correspond to the input card information, or only the input ID number may correspond to the input card information. In addition, for example, when the card C has a function of a loyalty card, a loyalty card number may correspond to the input card information.

In the first embodiment, the input card information acquisition module 102 acquires the input card number and input expiration date input by the user and the input ID number acquired through use of the NFC unit 33A or the photographing unit 36. It suffices that the input card number and the input expiration date are acquired by a predetermined method, and the user is not required to manually input the input card number and the input expiration date. For example, the input card number and the input expiration date may be acquired by executing the optical character recognition on the photographed image in which the front side of the card C has been photographed. In addition, for example, when the input card number and the input expiration date are recorded in the user terminal 30, the input card number and the input expiration date stored in the user terminal 30 may be acquired by being read out. In addition, for example, when the input card number and the input expiration date are recorded in the IC chip cp of the card C, the input card number and the input expiration date may be acquired through use of the NFC unit 33A.

In the first embodiment, the business entity server 10 directly communicates to/from the user terminal 30, and hence the input card information acquisition module 102 directly acquires the input card information from the user terminal 30. When there is a computer for mediating communication between the business entity server 10 and the user terminal 30, the input card information acquisition module 102 may acquire the input card information transferred by this computer. That is, the input card information acquisition module 102 may indirectly acquire the input card information from the user terminal 30.

### [Authentication Module]

The authentication module 103 executes the authentication based on the logged-in user account and the input card information, and on the registered user account and the registered card information that are registered in advance. In the first embodiment, this authentication is authentication for the transportation-related service. That is, the authentication in the first embodiment is authentication serving as a condition for whether or not to execute predetermined processing in the transportation-related service. In the first embodiment, this processing is registration processing performed by the registration module 104, which is described later.

In the first embodiment, the registered card information includes information for the user to use the fitness service that can be used through use of the card C. For example, the registered card information includes the registered ID number used for the fitness service. The card number and the expiration date are not for use of the fitness service, but in the first embodiment, are used to confirm the validity of the card. As described above, the registered user account is the information to be used for login to the fitness service, and is the same as the registered user account for the transportation-related service. When the user logs in to the fitness service, the user can perform, for example, various kinds of information and applications relating to the fitness club.

In the first embodiment, the authentication module 103 receives a result of the confirmation obtained by a confirmation module 203 from the administrator server 20, and executes the authentication. This result of the confirmation is a result of confirmation of whether or not the same pair of the registered user account and the registered card information as the pair of the logged-in user account and the input card information is present in the administrator server 20. The result of the confirmation indicates any one of a first value, which means that the same pair is present, or a second value, which means that the same pair is not present. When the same pair is present, the authentication is successful. When the same pair is not present, the authentication fails. In the first embodiment, the confirmation of the presence of the same pair requires a perfect match, but the authentication may be successful in a case of a partial match.

### [Registration Module]

The registration module 104 executes registration processing relating to the card C based on an execution result of the authentication. The registration processing is processing for enabling the use of the card C to be registered. In the first embodiment, registering the card C in the app corresponds to the registration processing. When the app is not used in particular, the registration processing may mean recording the card information on some computer such as the business entity server 10.

The card C to be registered is the card C to be registered by the registration processing. The card C to be registered is identified by the card number. In the first embodiment, the card C including the input card information corresponds to the card C to be registered. In the first embodiment, a case in which the card number of the card C to be registered is input by the user is described, but this card number can be acquired by any method.

The registration module 104 executes the registration processing when the authentication is successful, and does not execute the registration processing when the authentication fails. That is, the success or failure of the authentication is a condition for whether or not to execute the registration processing. When the authentication of a certain user is successful, the registration module 104 executes the registration processing by storing the card information of the card C to be registered into a record of the user database DB1 that corresponds to the registered user account of the certain user.

The card information registered by the registration processing may be all or part of the card information used for the authentication, or may be card information different from the card information used for the authentication. In the first embodiment, it is assumed that, of the pieces of card information, the card number and the expiration date that are used for the transportation-related service are registered by the registration processing. It is assumed that the input ID number is used only for the authentication and is not registered in the user database DB1, but the same registered ID number as the input ID number may also be registered in the user database DB1.

### [1-3-2. Functions implemented on Administrator Server]

As illustrated in FIG. 6, on the administrator server 20, a data storage unit 200, a logged-in user account acquisition module 201, an input card information acquisition module 202, and the confirmation module 203 are implemented. The data storage unit 200 is implemented mainly by the storage unit 22. Each of the other functions is mainly implemented by the control unit 21.

### [Data Storage Unit]

The data storage unit 200 stores the data required for authentication. For example, the card database DB2 is described for the data storage unit 200.

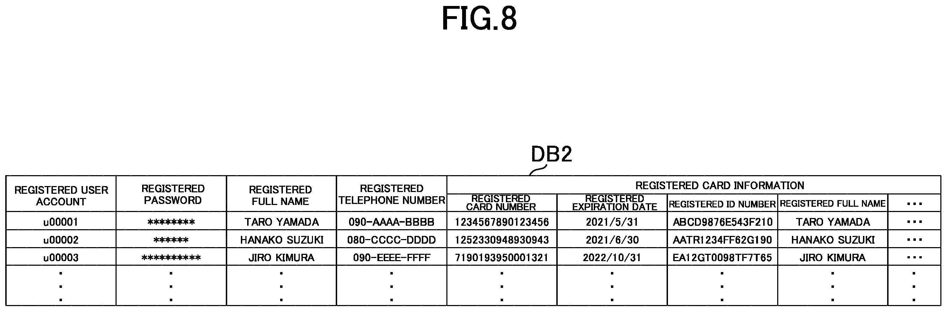

FIG. 8 is a table for showing a data storage example of the card database DB2. As shown in FIG. 8, the card database DB2 is a database in which registered card information of the issued card C is stored. For example, the card database DB2 stores a registered user account, a registered password, a registered full name, a registered telephone number, and registered card information. For example, when a new card C is issued, a new record is created in the card database DB2. In the first embodiment, the user designates the user account when the user applies for the card C, and this user account is stored in the new record as the registered user account. In this record, the full name and telephone number designated at a time of the application for the card C are stored as the registered full name and registered telephone number, respectively, and the registered card information of the issued card C is also stored.

The registered card information stored in the card database DB2 may be only the card number, or may include information (for example, a security code or a password in so-called 3-D Secure) other than the information shown in FIG. 8. When the card C is registered in the app, all or part of the registered card information of the card C stored in the card database DB2 is stored into the user database DB1. The registered card information is registered by the administrator when the card C is issued.

### [Logged-in User Account Acquisition Module]

The logged-in user account acquisition module 201 acquires a logged-in user account that can identify a user who has logged in from the user terminal 30. In the first embodiment, a case in which the logged-in user account acquisition module 201 acquires the logged-in user account transmitted from the business entity server 10 is described, but the logged-in user account acquisition module 201 may acquire the logged-in user account from the user terminal 30 or another computer.

### [Input Card Information Acquisition Module]

The input card information acquisition module 202 acquires the input card information relating to the card C possessed by the user, which has been input from the user terminal 30 through use of the NFC unit 33A or the photographing unit 36. In the first embodiment, the input card information acquisition module 202 acquires the input card information transferred from the business entity server 10. The input card information acquisition module 202 may acquire the input card information from the user terminal 30 or another computer.

### [Confirmation Module]

The confirmation module 203 confirms the registered user account and the registered card information corresponding to the logged-in user account and the input card information. This confirmation is a confirmation of whether or not the same pair of the registered user account and the registered card information as the pair of the logged-in user account and the input card information is present in the card database DB2.

For example, the confirmation module 203 acquires the registered card information registered in association with the same registered user account as the logged-in user account. In the first embodiment, the registered card information is stored in the card database DB2, and hence the administrator server 20 acquires the registered card information from the card database DB2. When the registered card information is stored in an external computer or an external information storage medium, the confirmation module 203 may acquire the registered card information from the external computer or the external information storage medium.

The acquired registered card information described above is information to be used as a correct answer at the time of the authentication. The registered card information is information corresponding to an index at the time of authentication. The registered card information is not limited to a number or an ID format, and may have any format. For example, the registered card information may be an image, or may be characters, numerals, or a combination thereof. The registered card information may be information that can be compared to the input card information. The registered card information may have the same format as that of the input information, or may have a format different therefrom.

The confirmation module 203 determines whether or not the input card information and the registered card information match. As described above, in the first embodiment, a perfect match is required, it may be determined that those match in a case of a partial match. The confirmation module 203 transmits a result of the confirmation to the business entity server 10. In contrast to the above-mentioned case, the confirmation module 203 may acquire the registered user account associated with the same registered card information as the input card information to determine whether or not the registered user account and the logged-in user account match.

### [1-3-3. Functions implemented on User Terminal]

As illustrated in FIG. 6, on the user terminal 30, a data storage unit 300, a display control module 301, and a reception module 302 are implemented. The data storage unit 300 is implemented mainly by the storage unit 32. Each of the display control module 301 and the reception module 302 is implemented mainly by the control unit 31. The data storage unit 300 stores data required for processing described in the first embodiment. For example, the data storage unit 300 stores a transportation-related app. The display control module 301 causes the display unit 35 to display each of the screens described with reference to FIG. 2 and FIG. 4 based on the app. The reception module 302 receives the user's operation on each screen.

### [1-4. Processing to be executed in First Embodiment]

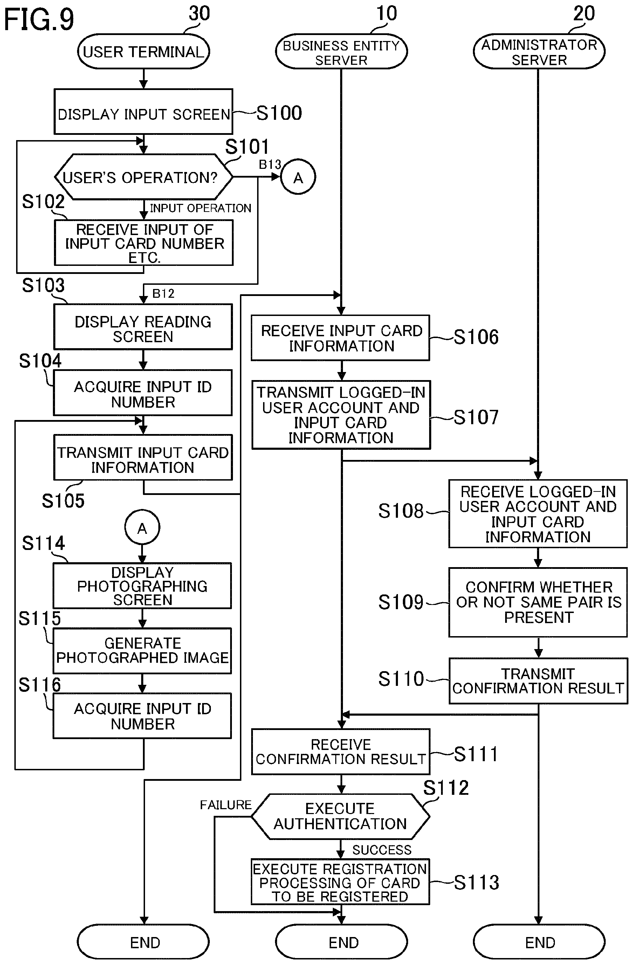

FIG. 9 is a flow chart for illustrating an example of processing to be executed in the first embodiment. The processing illustrated in FIG. 9 is executed by the control units 11, 21, and 31 operating in accordance with the programs stored in the storage units 12, 22, and 32, respectively. This processing is an example of processing to be executed by the functional blocks illustrated in FIG. 6. This processing is executed when the app of the user terminal 30 is activated and an operation for registering the card C is performed from a predetermined menu.

As illustrated in FIG. 9, the user terminal 30 causes the display unit 35 to display the input screen G1 for inputting a card number and an expiration date (Step S100) . The user terminal 30 identifies an operation of the user based on a detection signal obtained by the operating unit 34 (Step S101). In Step S101, an input operation with respect to the input forms F10 and F11 and a selection operation for each of the buttons B12 and B13 are performed. When a button B14 is selected, this process ends.

When an input operation is performed on the input forms F10 and F11 ("input operation" in Step S101), the user terminal 30 receives the input of the input card number and the input expiration date of the card C to be registered (Step S102), and the process returns to Step S101. In Step S102, the card number and the expiration date that have been input by the user are displayed on the input forms F10 and F11. The displayed card number and expiration date are the input card number and input expiration date, respectively.

When the selection operation of the button B12 is performed ("B12" in Step S101), the user terminal 30 activates the NFC unit 33A to display the reading screen G2 on the display unit 35 (Step S103). The user terminal 30 uses the NFC unit 33A to acquire the input ID number from the IC chip cp of the card C (Step S104), and transmits, to the business entity server 10, the input card information including the input card number and the input expiration date that have been input to the input forms F10 and F11, respectively, and the input ID number obtained from the card C (Step S105) . The user has already logged in to the app, and the logged-in user account is also transmitted to the business entity server 10. In another case, when the reading by the NFC unit 33A results in an error, this process may end, or other authentication such as authentication utilizing the input code written on the back side of the card C may be executed.

When the business entity server 10 receives the logged-in user account and the input card information from the user terminal 30 (Step S106), the business entity server 10 transmits the logged-in user account and the input card information to the administrator server 20 (Step S107). When the administrator server 20 receives the logged-in user account and the input card information from the business entity server 10 (Step S108), the administrator server 20 refers to the card database DB2 to confirm whether or not the same pair of the registered user information and the registered card information as the pair of the logged-in user account and the input card information that have been received is present (Step S109). In Step S109, when the same pair is not present, an error occurs, and this process ends. In this case, the card C is not registered.

The administrator server 20 transmits a result of the confirmation obtained in Step S109 to the business entity server 10 (Step S110). It is assumed that this result of the confirmation includes, for example, the logged-in user account received in Step S108. When the business entity server 10 receives the result of the confirmation from the administrator server 20 (Step Sill), the business entity server 10 refers to the result of the confirmation to execute the authentication (Step S112). When the result of the confirmation indicates the match and the authentication is successful ("success" in Step S112), the business entity server 10 executes the registration processing of the card C to be registered (Step S113), and this process ends. In Step S113, the business entity server 10 registers the card information of the card to be registered in the user database DB1 in association with the registered user account of the user. The business entity server 10 transmits the display data of the success screen G3 to the user terminal 30, and the success screen G3 is displayed.

Meanwhile, when the authentication fails due to the result of the confirmation not indicating the match ("failure" in Step S112), the processing step of Step S113 is not executed, and this process ends. In this case, the card information of the card C to be registered is not registered in the user database DB1. The business entity server 10 transmits the display data of the failure screen G4 to the user terminal 30, and the failure screen G4 is displayed.

When the selection operation of the button B13 is performed in Step S101 ("B13" in Step S101), the user terminal 30 activates the photographing unit 36 to display the images continuously photographed by the photographing unit 36 on the photographing screen G5 (Step S114) . When the user, for example, taps on the photographing screen G5, the user terminal 30 causes the photographing unit 36 to photograph the card C, and generates a photographed image (Step S115). The user terminal 30 executes the optical character recognition on the photographed image to acquire the input ID number (Step S116), and the process advances to Step S105. In another case, when the input ID number is not acquired and an error occurs, this process may end, and other authentication such as the authentication utilizing the input code written on the back side of the card C may be executed. The optical character recognition may be executed by the business entity server 10 or the administrator server 20.

According to the authentication system S of the first embodiment, the authentication is executed based on the logged-in user account of the user who has logged in from the user terminal 30, the input card information input from the user terminal 30 through use of the NFC unit 33A or the photographing unit 36, the registered user account, and the registered card information, to thereby enhance the security in possession authentication utilizing the card C. In addition, when the photographing unit 36 is used, a malicious third party dislikes his or her face included in the photograph for some reason, and hence requesting the card C to be photographed can pose a psychological barrier. In another regard, card information including a card number may be registered in various servers, and can be said to be information relatively accessible to a malicious third party. Meanwhile, a registered ID number is registered in a small number of servers, and hence cannot be obtained by a third party in principle. Accordingly, even when a third party fraudulently obtains the card information, the input ID number cannot be identified in principle unless the card C itself is stolen. In view of this, the authentication is executed by utilizing the same input ID number as the registered ID number, to thereby be able to prevent unauthorized registration from being performed by a third party who has fraudulently obtained the card information. For example, authentication involving input of an input code written on the back side of the card C is also generally called possession authentication, but the possession authentication in the first embodiment cannot be successful only based on knowledge of the input code or other such information, and hence it is possible to achieve robust possession authentication in terms of security.

Further, in the authentication system S, the logged-in user account utilizes the input card information and the registered card information for use of the fitness service different from the transportation-related service, to thereby be able to execute the authentication based on the information that is more difficult for a third party to obtain, resulting in enhanced security.

Further, in the authentication system S, the administrator server 20 confirms whether or not the same pair of the registered user account and the registered card information as the pair of the logged-in user account and the input card information is present, and the business entity server 10 acquires the result of the confirmation from the administrator server 20 and executes the authentication, to thereby eliminate requirement to manage the registered card information on the business entity server 10 before the authentication and prevent the registered card information from being transmitted on the network N. Accordingly, the registered card information being confidential information is less liable to be leaked, to thereby be able to effectively enhance the security. In addition, the processing required for the authentication is shared between the business entity server 10 and the administrator server 20, to thereby be able to distribute processing loads at the time of the authentication.

Further, in the authentication system S, the registration processing relating to the card C is executed based on the execution result of the authentication, to thereby enhance the security at the time of the registration of the card. That is, it is possible to prevent unauthorized registration from being performed by a third party who has fraudulently obtained the card information.

### [2. Second Embodiment]

Next, the authentication system S according to a second embodiment of the present disclosure is described. In the second embodiment, a case in which the confirmation of whether or not the same pair of the registered user account and the registered ID number as the pair of the logged-in user account and the input ID number is present is executed by the business entity server 10 instead of the administrator server 20 is described. In the same manner as in the first embodiment, the registered user account and the registered card information are registered in the administrator server 20. The same points as those of the first embodiment are omitted from the following description.

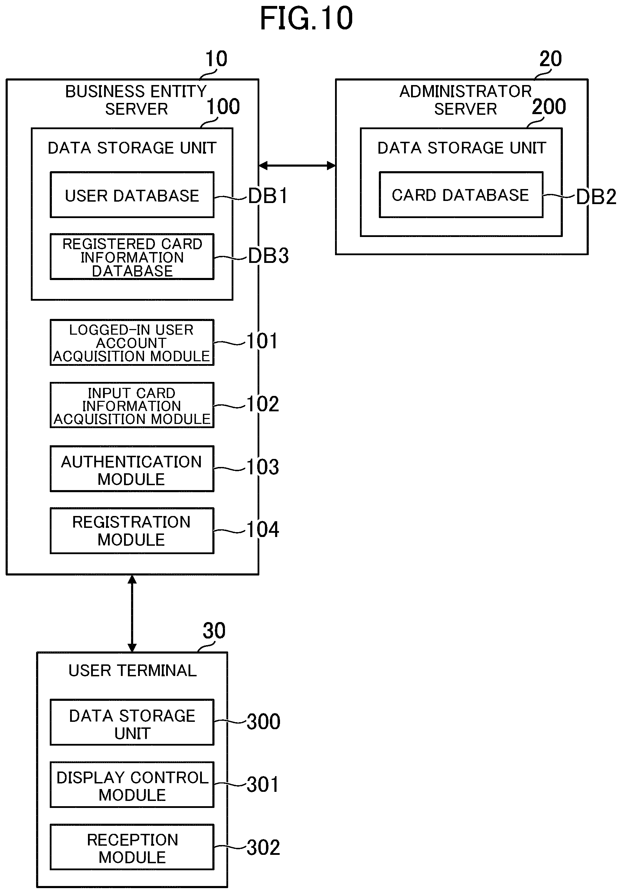

FIG. 10 is a functional block diagram in the second embodiment. As illustrated in FIG. 10, the function of the confirmation module 203 described in the first embodiment is incorporated in the authentication module 103, and hence the confirmation module 203 is not shown in FIG. 10. In addition, the logged-in user account acquisition module 201 and the input card information acquisition module 202 can be omitted. The data storage unit 100 in the second embodiment stores a registered card information database DB3. The registered card information database DB3 is the same database as the card database DB2 described in the first embodiment. A data storage example of the registered card information database DB3 is the same as that of FIG. 8, and hence illustration thereof is omitted. The registered card information may be hashed.

The business entity server 10 receives at least one of the registered user account or the registered card information from the administrator server 20. In the second embodiment, a case in which the business entity server 10 receives both of those is described. For example, the administrator server 20 transmits the registered user account and the registered card information to the business entity server 10 each time the card C is issued. When the business entity server 10 receives the registered user account and the registered card information, the business entity server 10 stores the pair of those in the registered card information database DB3. The registered card information database DB3 may store all the registered user accounts and pieces of registered card information of the card database DB2, or may store some of the registered user accounts and pieces of registered card information.

The authentication module 103 of the business entity server 10 executes the authentication based on at least one of the registered user account or registered card information received from the administrator server 20. In the second embodiment, those registered user accounts and pieces of registered card information are stored in the registered card information database DB3, and hence the authentication module 103 confirms based on the registered card information database DB3 whether or not the same pair of the registered user account and the registered card information as the pair of the logged-in user account and the input card information is present in the registered card information database DB3. This confirmation method itself is as described in the embodiment.

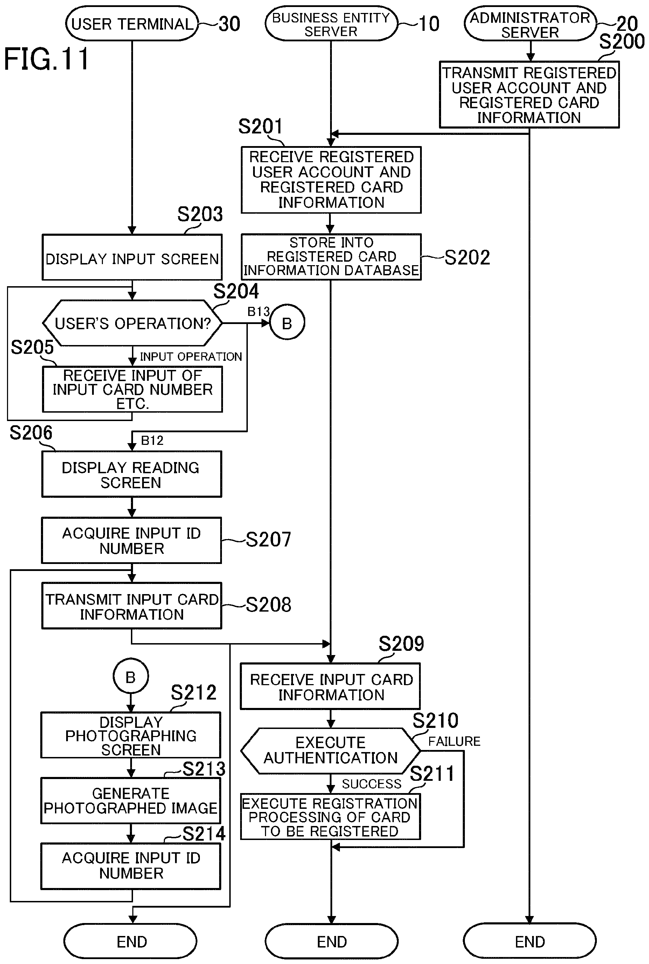

FIG. 11 is a flow chart for illustrating an example of processing to be executed in the second embodiment. As illustrated in FIG. 11, when a new card C is issued, the administrator server 20 transmits the pair of the registered user account and the registered card information to the business entity server 10 (Step S200). When the business entity server 10 receives the pair of the registered user account and the registered card information (Step S201), the business entity server 10 stores the received pair into the registered card information database DB3 (Step S202) . The subsequent processing steps of from Step S203 to Step S209 are the same as the processing steps of from Step S100 to Step S106.

The business entity server 10 executes the authentication by confirming based on the registered card information database DB3 whether or not the pair of the registered user account and the registered card information that match the pair of the logged-in user account of the user who has logged in and the input card information is present (Step S210). The processing step of Step S210 is the same as the processing step of Step S112 executed after the processing step of Step S119 executed by the business entity server 10. The subsequent processing step of Step S211 is the same as that of Step S113. Further, the processing steps of Step S212 to Step S214 are the same as those of Step S114 to Step S116.

According to the second embodiment, the business entity server 10 confirms based on the registered card information database DB3 whether or not the same pair of the registered user account and the registered user information as the logged-in user account and the input user information is present, to thereby eliminate requirement to cause the communication between the business entity server 10 and the administrator server 20 at the time of the authentication, and hence it is possible to speed up the authentication. In addition, the administrator server 20 does not execute the confirmation at the time of the authentication, and hence it is possible to reduce a processing load on the administrator server 20.

The business entity server 10 may acquire the registered user account or the registered card information at the time of the authentication instead of storing the registered user account and the registered card information in advance in the registered card information database DB3. For example, the business entity server 10 may request the administrator server 20 for the registered card information associated with the same registered user account as the logged-in user account. The administrator server 20 acquires the registered card information associated with the same registered user account as the logged-in user account from the card database DB2, and transmits the registered card information to the business entity server 10. The business entity server 10 acquires the registered card information transmitted by the administrator server 20. The authentication module 103 determines whether or not the input card information and the acquired registered card information match. When those pieces of information match, the authentication is successful. In this manner, the registered card information is dynamically acquired at the time of the authentication, and hence it is not required for the business entity server 10 to store the registered card information database DB3.

Further, the business entity server 10 may request the administrator server 20 for the registered user account associated with the same registered card information as the input card information. The administrator server 20 acquires the registered user account associated with the same registered card information as the input card information from the card database DB2, and transmits the registered user account to the business entity server 10. The business entity server 10 acquires the registered user account transmitted by the administrator server 20. The authentication module 103 determines whether or not the logged-in user account and the acquired registered user account match. When those accounts match, the authentication is successful. In this manner, the registered user account is dynamically acquired at the time of the authentication, and hence it is not required for the business entity server 10 to store the registered card information database DB3.

### [3. Modification Examples]

The present disclosure is not limited to the embodiments described above, and can be modified suitably without departing from the spirit of the present disclosure.

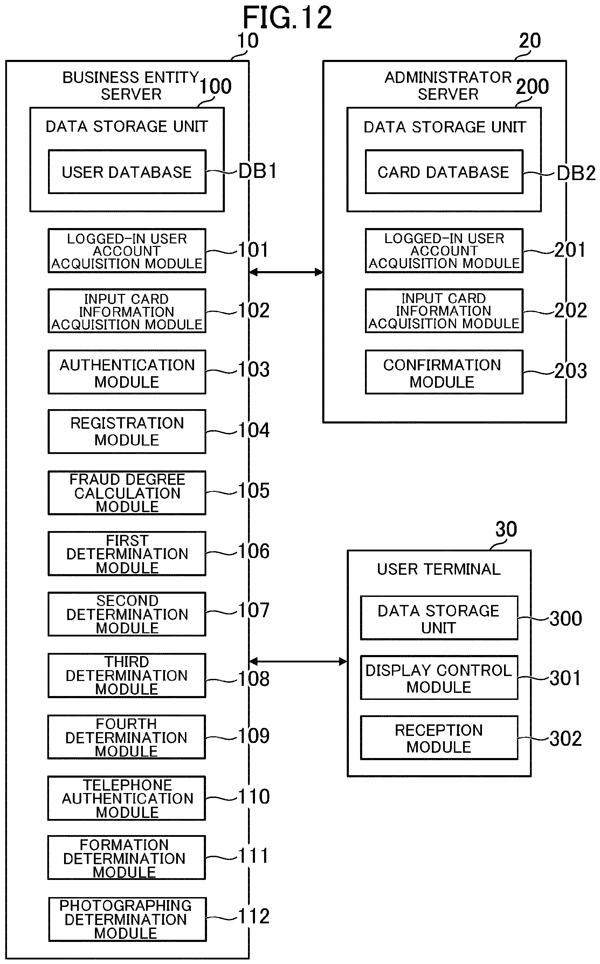

FIG. 12 is a functional block diagram in the modification examples. As illustrated in FIG. 12, in the modification examples described below, in addition to the functions described in the embodiments, a fraud degree calculation module 105, a first determination module 106, a second determination module 107, a third determination module 108, a fourth determination module 109, a telephone authentication module 110, a formation determination module 111, and a photographing determination module 112 are implemented. Each of those functions is implemented mainly by the control unit 11. In FIG. 12, each of the functions is added to the functional blocks of the first embodiment. Each of the functions may be added to the functional blocks of the second embodiment.

### [3-1. Modification Example 1]

For example, the card C may include a first storage area that requires a key for the NFC unit 33A to read the first storage area and a second storage area that does not require the key for the NFC unit 33A to read the second storage area.

The first storage area is an area of a first address band in a storage unit included in the IC chip cp of the card C. A key is required for access to the first storage area. The key may be stored in the user terminal 30, or may be stored in a server computer accessible to the user terminal 30. The IC chip cp stores a key to be used for the authentication for the access to the first storage area. A CPU included in the IC chip cp executes the authentication based on the key in the IC chip cp and a key received from the NFC unit 33A of the user terminal 30. When the authentication is successful, the access to the first storage area becomes possible.

The second storage area is an area of a second address band in the storage unit included in the IC chip cp of the card C. A key is not required for access to the second storage area. Accordingly, the access to the second storage area is not particularly required to be authenticated.

Each of the first storage area and the second storage area can store any information. For example, the input ID number may be recorded in both the first storage area and the second storage area. Further, for example, there may be information stored in the first storage area but not stored in the second storage area. For example, the ID that can identify the IC chip cp may be stored only in the first storage area. In contrast, there may be information stored in the second storage area but not stored in the first storage area. For example, an ID that is not stored in the first storage area may be stored in the second storage area.

The authentication system S includes the fraud degree calculation module 105 and the first determination module 106. The fraud degree calculation module 105 calculates the fraud degree of a user based on an action of the user. The fraud degree is information indicating the degree of a fraud or information indicating the level of suspicion of being a fraud. In Modification Example 1 of the present disclosure, a case in which the fraud degree is expressed by a score is described, but the fraud degree may be expressed by another index. The fraud degree may be expressed by characters, for example, "S rank," "A rank," and "B rank."

For example, the fraud degree calculation module 105 calculates the fraud degree through use of a learning model. The learning model is a model using machine learning (artificial intelligence). As the machine learning itself, it is possible to use various publicly known methods, and it is possible to use a method, for example, a neural network or deep learning. In the learning model, a relationship between an action that can be performed by the user and a determined result of whether or not the action is a fraud has been learned. As the learning model, a model of unsupervised machine learning may be used.

The action is information indicating how the user has used a service. The action can also be said to be details of use of the service or a behavior at a time of use of the service. For example, an IP address of the user terminal 30, a URL accessed by the user terminal 30, a location of the user terminal 30, and an access date/time each correspond to the action of the user. In addition, for example, information on a frequency at which the user has used the service or an amount of money that has been used by the user also corresponds to the action of the user.

It is assumed that data indicating the action of the user is stored in the data storage unit 100. This data is updated each time the user uses the service. The fraud degree calculation module 105 quantifies the action performed until the user displays the input screen G1, and inputs the action to the learning model to acquire the fraud degree output from the learning model. The learning model calculates a feature amount of the input action, and outputs the fraud degree corresponding to the feature amount. The fraud degree calculation module 105 acquires the fraud degree output from the learning model.

For example, the fraud degree calculation module 105 calculates the fraud degree so that the fraud degree becomes higher as the IP address varies more widely. Further, for example, the fraud degree calculation module 105 calculates the fraud degree so that the fraud degree becomes higher as the URL accessed by the user varies more widely. Further, for example, the fraud degree calculation module 105 calculates the fraud degree so that the fraud degree becomes higher as the access location is farther apart from the center of the use or the access location varies more widely.

Further, for example, the fraud degree calculation module 105 calculates the fraud degree so that the fraud degree becomes higher as the access date/time is farther apart from an average access date/time or the access date/time varies more widely. Further, for example, the fraud degree calculation module 105 calculates the fraud degree so that the fraud degree becomes higher as the access frequency is farther apart from the an average access frequency or the access frequency varies more widely.

The fraud degree is only required to be calculated based on a predetermined method, and is not limited to the example using the learning model. For example, the fraud degree calculation module 105 may calculate the fraud degree of the user through use of not the learning model but a rule that defines a relationship between the action of the user and the fraud degree. In this case, the fraud degree calculation module 105 determines whether or not the action of the user matches the rule. When the action matches the rule, the fraud degree associated with the matched rule is obtained. In another case, for example, the fraud degree calculation module 105 may calculate the fraud degree by quantifying the action of the user and substituting the resultant into a predetermined calculation formula.

The first determination module 106 determines a storage area to be used for the authentication from the first storage area and the second storage area based on the fraud degree. For example, the first determination module 106 determines that the first storage area is to be used when the fraud degree is equal to or higher than a threshold value. Further, for example, the first determination module 106 determines that the second storage area is to be used when the fraud degree is lower than the threshold value. The first determination module 106 may determine that both the first storage area and the second storage area are to be used when the fraud degree is equal to or higher than the threshold value. The first determination module 106 transmits information for identifying the storage area to be used for the authentication to the user terminal 30.

The user terminal 30 reads the storage area determined by the first determination module 106. For example, when it is determined that the first storage area is to be read, the user terminal 30 uses the key to read the first storage area. When the key is stored in the user terminal 30, the user terminal 30 uses the stored key to read the first storage area. When the key is stored in the server computer, the user terminal 30 logs in to the server computer and obtains the key.

Further, for example, when the user terminal 30 receives the above-mentioned information and it is determined that the second storage area is to be read, the user terminal 30 reads the second storage area without use of the key. For example, when the input ID number is stored in each of the first storage area and the second storage area, the user terminal 30 may transmit, to the business entity server 10, the card information including the input ID number included in one of the first storage area and the second storage area which has been read. In this case, the user terminal 30 adds information for identifying which storage area the information has been read from.

When it is determined that the first storage area is to be used, the input card information acquisition module 102 acquires a first piece of input card information, which has been stored in the first storage area, and has been input from the user terminal 30 through use of the NFC unit 33A. When it is determined that the second storage area is to be used, the input card information acquisition module 102 acquires a second piece of input card information, which has been stored in the second storage area, and has been input from the user terminal 30 through use of the NFC unit 33A. The flow after the first piece of input card information or the second piece of input card information has been acquired is as described in the first embodiment and the second embodiment.

The authentication module 103 also assumes, as a condition for the successful authentication, that the input card information has been acquired by being read from the storage area determined by the first determination module 106. Accordingly, even when some input card information is input, the authentication is not successful unless the input card information has been read from the storage area determined by the first determination module 106. This determination may be executed based on the above-mentioned information received from the user terminal 30.

The first piece of input card information read from the first storage area and the second piece of input card information read from the second storage area may be different in type from each other. For example, an ID for identifying the IC chip cp itself may be read from the first storage area, and the input ID number of the fitness club may be read from the second storage area. In this case, the authentication module 103 also assumes, as a condition for the successful authentication, that a type of information which corresponds to the storage area determined by the first determination module 106 is input. Accordingly, even when some information is input, the authentication is not successful unless the information is information of the type corresponding to the storage area determined by the first determination module 106.

According to Modification Example 1, the storage area to be used for the authentication is determined from the first storage area and the second storage area of the card C based on the fraud degree of the user, to thereby be able to ensure the security corresponding to the fraud degree of the user. It is possible to properly execute the authentication by, for example, executing, when the fraud degree of the user is high, highly accurate authentication using the first storage area that inhibits success without the key even after some time has been taken, and executing, when the fraud degree of the user is low, quick authentication using the second storage area that is not required to be authenticated based on the key. As a result, it is possible to improve convenience of the user while enhancing the security. It is also possible to reduce processing loads on the entire system by dynamically adjusting the authentication depending on the fraud degree of the user.

### [3-2. Modification Example 2]

For example, a unit to be used for the authentication may be determined from the NFC unit 33A and the photographing unit 36 depending on the fraud degree of the user. The authentication system S according to Modification Example 2 of the present disclosure includes the fraud degree calculation module 105 and the second determination module 107 that are the same as those of Modification Example 1. The second determination module 107 determines the unit to be used for the authentication from the NFC unit 33A and the photographing unit 36 based on the fraud degree. The unit to be used for the authentication may be any one of the NFC unit 33A or the photographing unit 36, or may be both the NFC unit 33A and the photographing unit 36.

For example, the second determination module 107 determines that the NFC unit 33A is to be used when the fraud degree is equal to or higher than a threshold value, and determines that the photographing unit 36 is to be used when the fraud degree is lower than the threshold value. In contrast, the second determination module 107 may determine that the photographing unit 36 is to be used when the fraud degree is equal to or higher than the threshold value, and may determine that the NFC unit 33A is to be used when the fraud degree is lower than the threshold value. In addition, for example, the second determination module 107 may determine that both the NFC unit 33A and the photographing unit 36 are to be used when the fraud degree is equal to or higher than the threshold value, and may determine that any one of the NFC unit 33A or the photographing unit 36 is to be used when the fraud degree is lower than the threshold value. The second determination module 107 transmits information for identifying one of the NFC unit 33A and the photographing unit 36 which has been determined to be used for the authentication.

When the user terminal 30 receives the above-mentioned information, the user terminal 30 acquires the input ID number through use of the one of the NFC unit 33A and the photographing unit 36 which has been determined by the second determination module 107. The method itself of acquiring the input ID number is as described in the first embodiment and the second embodiment. However, the user cannot freely select whether to use the NFC unit 33A or the photographing unit 36, and which one to be used is determined only by the second determination module 107. The user terminal 30 adds, to the input ID number, information for identifying which one of the NFC unit 33A and the photographing unit 36 has been used to acquire the input ID number, and transmits the card information including the input ID number to the business entity server 10.

When it is determined that the NFC unit 33A is to be used, the input card information acquisition module 102 in Modification Example 2 uses the NFC unit 33A to acquire the input ID number input from the user terminal 30. When it is determined that the photographing unit 36 is to be used, the input card information acquisition module 102 uses the photographing unit 36 to acquire the input card information input from the user terminal 30. The flow after the input ID number has been acquired is as described in the first embodiment and the second embodiment.

The authentication module 103 also assumes, as a condition for the successful authentication, that the card information includes the input ID number that has been acquired through use of the one of the NFC unit 33A and the photographing unit 36 which has been determined by the second determination module 107. Accordingly, even when some input ID number is input, the authentication is not successful unless the input ID number has been read from one of the units which has been determined by the second determination module 107. This determination may be executed based on the above-mentioned information received from the user terminal 30.

According to Modification Example 2, the one of the NFC unit 33A and the photographing unit 36 which is to be used for the authentication is determined based on the fraud degree of the user, to thereby be able to ensure the security corresponding to the fraud degree of the user. It is possible to properly execute the authentication by, for example, using the NFC authentication having higher security when the fraud degree of the user is high, and using simpler image authentication when the fraud degree of the user is low. As a result, it is possible to improve the convenience of the user while enhancing the security. It is also possible to reduce the processing loads on the entire system by dynamically adjusting the authentication depending on the fraud degree of the user.

### [3-3. Modification Example 3]

For example, when the card C includes a plurality of types of information, the information to be used for the authentication may be determined based on the fraud degree of the user. The authentication system S according to Modification Example 3 of the present disclosure includes the fraud degree calculation module 105 that is the same as that of Modification Example 1, and the third determination module 108. The third determination module 108 determines the type of information to be used as the input card information among a plurality of types of information contained in the card C based on the fraud degree.

For example, the third determination module 108 determines the information to be used for the authentication so that the amount of information to be used for the authentication becomes larger as the fraud degree becomes higher. Further, for example, the third determination module 108 determines the information to be used for the authentication so that the amount of information to be used for the authentication becomes smaller as the fraud degree becomes lower. Further, for example, the third determination module 108 determines that a first piece of information having a relatively large information amount is to be used when the fraud degree is equal to or higher than a threshold value, and determines that a second piece of information having a relatively small information amount is to be used when the fraud degree is lower than the threshold value. The third determination module 108 transmits information for identifying the information to be used for the authentication.

When the user terminal 30 receives the above-mentioned information, the user terminal 30 uses the NFC unit 33A or the photographing unit 36 to acquire the information indicated in the above-mentioned information from the card C. For example, when the information to be used for the authentication is only the input ID number, the user terminal 30 acquires the input ID number in the same manner as in the first embodiment and the second embodiment. Further, for example, when other information is included in the information to be used for the authentication, the user terminal 30 also acquires the other information from the card C. For example, when the input card number and the input expiration date are recorded in the IC chip cp, those pieces of information may be used as the other information.

The input card information acquisition module 102 in Modification Example 3 acquires the input card information of the determined type. The flow after the input card information has been acquired is as described in the first embodiment and the second embodiment. The authentication module 103 executes the authentication based on the information determined by the third determination module 108.

According to Modification Example 3, the information to be used for the authentication is determined based on the fraud degree of the user, to thereby be able to ensure the security corresponding to the fraud degree of the user. It is possible to properly use the information by, for example, using, when the fraud degree of the user is high, a larger amount of information for the authentication in order to further enhance the security, and using, when the fraud degree of the user is low, a smaller amount of information for the authentication so that the authentication becomes quicker and simpler. As a result, it is possible to improve the convenience of the user while enhancing the security. It is also possible to reduce the processing loads on the entire system by dynamically adjusting the authentication depending on the fraud degree of the user.

### [3-4. Modification Example 4]

For example, the authentication system S may be capable of executing a plurality of types of authentication including the authentication. The plurality of types of authentication may include any authentication in addition to the NFC authentication and the image authentication, which have been described in the first embodiment and the second embodiment. For example, the plurality of types of authentication may include code authentication for having the user input an input code on the back side of the card C, authentication for having the user input a password called 3-D Secure, biometric authentication, or a combination thereof. The user can select any type of authentication.

The authentication system S includes the fourth determination module 109. The fourth determination module 109 determines a usable range of the card C based on the type of authentication executed by the user. The usable range is a range of a service that can be used through use of the card information after the authentication. For example, this range is a monetary range, a temporal range, or an area-related range. For example, when transportation-related electronic money can be used for a transportation-related service described in the first embodiment and the second embodiment, an upper limit amount that can be paid at a time, an upper limit amount that can be loaded at a time, an upper limit amount of a total amount that can be loaded as electronic money at a time, an upper limit amount of a total amount that can be paid during a predetermined period, an upper limit amount that can be loaded during a predetermined period, or a combination thereof corresponds to the usable range.

It is assumed that data in which a relationship between the type of authentication and the usable range is defined is stored in advance in the data storage unit 100. This data may have any data format, for example, may have a table format or may be part of a program code. The fourth determination module 109 determines the usable range corresponding to the type of authentication executed by the user. As the authentication becomes higher in security, the usable range becomes wider. For example, when the usable range is the above-mentioned upper limit amount, as the security becomes higher, the upper limit amount becomes larger. The NFC authentication, which is the highest in security, provides the largest upper limit amount. The image authentication, which is the second highest in security, provides the second largest upper limit amount. In the same manner for the subsequent types of authentication, as the security becomes lower, the upper limit amount becomes smaller.

According to Modification Example 4 of the present disclosure, the usable range corresponding to the level of security of authentication executed by the user is set by determining the usable range of the card C based on the type of the authentication executed by the user, and it is possible to minimize damage when the card C is used fraudulently. In addition, the usable range is expanded for a user who has executed highly secure authentication, to thereby enhance the convenience of the user.

### [3-5. Modification Example 5]

For example, the authentication system S may further include the telephone authentication module 110 for executing telephone authentication based on a telephone number of the user, which is registered in advance. The telephone authentication may be any one of a method of calling the telephone number of the user to determine whether or not the user answers thereto or a method of instructing the user to originate a call to determine whether or not the telephone number of the call is a telephone number registered in advance. As the telephone authentication itself, a publicly known authentication method can be used. When both the authentication by the authentication module 103 and the telephone authentication by the telephone authentication module 110 are not successful, the card C is not registered in the app. Any one of the authentication by the authentication module 103 or the telephone authentication by the telephone authentication module 110 may be executed first.

The telephone number may be registered in the user database DB1, but in this modification example, it is assumed that the telephone authentication module 110 executes the telephone authentication based on the telephone number registered in a service different from the service relating to the authentication. The service relating to the authentication is a service for which the authentication is to be executed, and in this modification example, is the transportation-related service. The different service is a service other than the service relating to the authentication. This different service may be the fitness service, or may be a third service, which is different from the fitness service. However, it is assumed that the third service has the same user account as those of the first service and the second service. It is assumed that the business entity server 10 is linked to a server of the third service, and can perform the telephone authentication based on the telephone number registered in this server.

According to Modification Example 5 of the present disclosure, the telephone authentication is executed based on the telephone number of the user, which is registered in advance, to thereby be able to further enhance the security.

Further, the telephone authentication is executed based on the telephone number registered in a service different from the transportation-related service, and hence the telephone authentication can be executed through use of the telephone number for the service, which is difficult for a malicious third party to change without permission. For example, when the telephone number registered in the transportation-related service is used for the telephone authentication, it is conceivable that a malicious third party logs in to the transportation-related service by phishing or another method and changes the telephone number without permission to break through the telephone authentication, but the use of the telephone number for another service makes it difficult for the malicious third party to succeed in the telephone authentication.

### [3-6. Modification Example 6]

For example, the input card information may be an input card image in which a card is shown. In this case, the input card number, the input ID number, and other information may be acquired by executing the optical character recognition on the input card image, or the input card image may be compared to a registered card image to be used as a correct answer, which is registered in the card database DB2. In this modification example, the input card image and the registered card image are compared to each other, and when those images are similar to each other in terms of images, the authentication is successful.

When an attempt is made to execute the image authentication through use of the input card image, a malicious third party may obtain a paper sheet on which the card C was copied. In this case, the third party may photograph the paper sheet and input the photographed image as the input card image, and hence it may be determined whether or not the card C captured in the input card image is a card C that was formed on the paper sheet.

The authentication system S includes the formation determination module 111. The formation determination module 111 determines whether or not a paper sheet on which an image of a card was formed is shown in the input card image. That is, the formation determination module 111 determines whether the input card image is an input card image in which the real card C was photographed or an input card image in which the paper sheet having the image of the real card C formed thereon was photographed.

In this modification example, a case in which the formation determination module 111 executes processing for the determination based on a degree of reflection of light on a hologram portion of the card C is described. The formation determination module 111 calculates an average value of brightnesses of the hologram portion in the input card image, and determines whether or not the average value is equal to or larger than a threshold value. When the average value is equal to or larger than the threshold value, it is determined that the paper sheet is not shown (the real card C is shown). When the average value is smaller than the threshold value, it is determined that the paper sheet is shown.

The determination method of the formation determination module 111 is not limited to the above-mentioned example. For example, pattern matching may be executed by cutting out only the hologram portions of the input card image and the registered card image. In another case, for example, the user may be instructed to photograph the card C from each of a plurality of angles to generate a plurality of input card images, and the formation determination module 111 may identify a thickness of the card C by image analysis and determine whether or not the thickness is equal to or larger than a threshold value. When the thickness is equal to or larger than the threshold value, it is determined that the paper sheet is not shown (the real card C is shown). When the thickness is smaller than the threshold, it is determined that the paper sheet is shown.

The authentication module 103 further uses the determination result obtained by the formation determination module 111 to execute the authentication. When it is determined that the paper sheet having the card C formed thereon is not shown in the input card image and the input card image and the registered card image are similar to each other, the authentication is successful. When it is determined that the paper sheet having the card C formed thereon is shown in the input card image or when the input card image and the registered card image are not similar to each other, the authentication fails. That is, in this modification example, there are two conditions for the successful authentication, and satisfying both the two conditions is the condition for the successful authentication. When even any one of the conditions is not satisfied, the authentication fails.

According to Modification Example 6 of the present disclosure, the authentication is executed further based on the determination result of whether or not the paper sheet having the card C formed thereon is shown, to thereby be able to effectively enhance the security in possession authentication. For example, even when a third party obtains a paper sheet on which the card C was copied in some way, the paper sheet inhibits the successful authentication, and hence more robust security can be achieved.

### [3-7. Modification Example 7]

For example, a malicious third party may obtain image data of the card C. In this case, the third party may input an image thereof as the input card image, and hence it may be determined whether or not the card C captured in the input card image has been photographed by the photographing unit 36 of the user terminal 30.

The authentication system S includes the photographing determination module 112. The photographing determination module 112 determines whether or not the input card image has been generated by the photographing unit 36 of the user terminal 30. That is, the photographing determination module 112 determines whether or not the input card image is an input card image generated by the photographing unit 36 of the user terminal 30 or an input card image transferred to the user terminal 30 by having been photographed by another camera instead of the photographing unit 36 of the user terminal 30.

For example, when the card C is photographed by the photographing unit 36, the user terminal 30 generates photographing identification information that can identify that fact, and transmits the photographing identification information together with the input card image. The photographing determination module 112 determines whether or not the photographing identification information has been received, to thereby lead to the determination of whether or not the input card image has been generated by the photographing unit 36 of the user terminal 30. When the photographing identification information has been received, the determination is affirmative, and when the photographing identification information has not been received, the determination is negative.

This determination method may be any method. For example, information that can identify a terminal that has generated the input card image may be added to the input card image, and the photographing determination module 112 may refer to the added information to determine whether or not the input card image has been generated by the photographing unit 36 of the user terminal 30. When the added information indicates the user terminal 30, the determination is affirmative, and when the added information does not indicate the user terminal 30, the determination is negative.

Further, for example, on the photographing screen G5, the user may be requested to photograph the card C at a predetermined angle. This angle may be an oblique angle rather than a frontal angle. For example, the user may be requested to photograph the card C at an angle randomly selected from a plurality of angles. In this case, it is assumed that the card C was photographed at the same angle as the requested angle in the registered card image. In another case, for example, the card C may be photographed at a predetermined angle at a time point of generating a registered card image, and the angle may be stored in the card database DB2. On the photographing screen G5, the user may be requested to photograph the card C at the stored angle.

The photographing determination module 112 identifies the angle at which the card C has been photographed, based on a degree of distortion and a shape of a contour of the card C included in the input card image. The photographing determination module 112 may determine whether or not the identified angle is the angle requested to the user, to thereby lead to the determination of whether or not the input card image has been generated by the photographing unit 36 of the user terminal 30. It is highly possible that the photograph of the card C obtained by a malicious third party by some method has not been taken at such an angle, and hence the above-mentioned determination may be executed by determining the angle at which the card C has been photographed.

The authentication module 103 further uses the determination result obtained by the photographing determination module 112 to execute authentication. When it is determined that the input card image has been generated by the photographing unit 36 of the user terminal 30 and the input card image and the registered card image are similar to each other, the authentication is successful. When it is not determined that the input card image has been generated by the photographing unit 36 of the user terminal 30 or when the input card image and the registered card image are not similar to each other, the authentication fails. That is, in this modification example, there are two conditions for the successful authentication, and satisfying both the two conditions is the condition for the successful authentication. When even any one of the conditions is not satisfied, the authentication fails.

According to Modification Example 7 of the present disclosure, the authentication is executed further based on the determination result of whether or not the input card image has been generated by the photographing unit 36 of the user terminal 30, to thereby be able to effectively enhance the security. For example, even when a third party obtains image data of the card C in some way, the image data inhibits the successful authentication, and hence more robust security can be achieved.

### [3-8. Modification Example 8]

For example, the case in which the authentication system S is applied to the transportation-related service has been described, but the authentication system S can also be applied to services including an electronic payment service, an electronic commerce service, an electronic ticket service, a financial service, a communication service, and a social media service. In this modification example, a credit card that allows use of electronic money (a credit card with an electronic money function) is described as an example of the card C. The card C is not limited to the credit card, and may be any card C that can be used for the electronic payment service. For example, the card C may be a cash card, a debit card, a loyalty card, an electronic money card, or the card C for another electronic value.

The business entity in this modification example is a company that provides an electronic payment service. The administrator is a company that issues a credit card. Accordingly, in this modification example, the business entity and the administrator are different. The business entity and the administrator cooperate with each other, and any data can be transmitted between the business entity server 10 and the administrator server 20. The business entity and the administrator may be companies belonging to the same group, or may be different departments of the same company.

The logged-in user account in Modification Example 8 of the present disclosure is information for login to an electronic payment service that can use a credit card. The input card information includes information that can identify electronic money. For example, the input ID number is identification information on the electronic money. The registered user information is information for login to another service different from the electronic payment service, and is the same as the registered user information for the electronic payment service. It suffices that the other service is a service other than the electronic payment service, and is, for example, a service for confirming a statement of the credit card or an electronic money service. The registered card information is information that can identify electronic money registered in another service. The authentication is authentication for the electronic payment service.

The card database DB2 of the administrator server 20 stores the registered card information of an issued credit card. For example, the registered card information includes a registered credit card number, a registered expiration date, a registered ID number, a registered full name, and a registered security code. The registered card information may include an image in which at least one of the front side or the back side of the credit card has been captured. Each time the administrator issues a credit card, the administrator stores the card information included in the credit card in the card database DB2 in association with the registered user account. It is assumed that the registered user account is designated at the time of the application for the card.

The user database DB1 of the business entity server 10 stores the card information of the credit card registered in the app. The app in this modification example is an electronic payment app. The electronic payment app enables electronic payment to be performed by various methods. For example, a user selects a credit card to be used for payment, and causes a bar code or a two-dimensional code to be displayed on the user terminal 30 and to be read by a reader at a shop, to thereby execute the payment using the credit card. In another case, for example, when the photographing unit 36 of the user terminal 30 reads a bar code or a two-dimensional code provided by the shop, payment using a credit card selected by a user is executed. It suffices that the electronic payment app can execute payment using a registered credit card, and the payment method itself is not limited to those examples. For example, the payment using the registered credit card may be executed without particularly using a bar code or a two-dimensional code.

When the same flow as that of the first embodiment is taken as an example, the user activates the electronic payment app installed on the user terminal 30, and inputs the input credit card number and the input expiration date on the input screen G1. The user terminal 30 uses the NFC unit 33A or the photographing unit 36 to acquire the input ID number from the credit card. The user terminal 30 transmits the input card information including the input credit card number, the input expiration date, and the input ID number to the business entity server 10. The business entity server 10 transfers the logged-in user account and the input card information to the administrator server 20.

The administrator server 20 refers to the card database DB2 to confirm whether or not the same pair of the registered user account and the registered card information as the pair of the logged-in user account and the input card information that have been received is present, and transmits a result of the confirmation to the business entity server 10. The business entity server 10 refers to the result of the confirmation to execute the authentication. When the authentication is successful, the business entity server 10 registers the credit card number and other information in the user database DB1. From then on, the card having this credit card number can be used from the app for the electronic payment service.

In this modification example as well, the registration processing can be performed in the same flow as that of the second embodiment. In this case, the registered card information database DB3 of the business entity server 10 stores a pair of the registered user account and the registered card information. When the business entity server 10 receives the input card information, the business entity server 10 refers to the registered card information database DB3 to confirm whether or not the same pair of the registered user account and the registered card information as the pair of the logged-in user account and the input card information is present, to thereby execute the authentication. When the authentication is successful, the business entity server 10 registers the credit card number and other information in the user database DB1.

According to Modification Example 8, the security exhibited when a credit card is registered for an electronic payment service is enhanced.

The NFC authentication or the image authentication may be used in a situation in which an upper limit amount of use per time of a registered credit card is to be increased. In this case, it is assumed that only the authentication using, for example, a security code is performed at a time of the registration of a credit card. After that, the NFC authentication or the image authentication described above may be used when the upper limit amount of use is to be increased. The credit card has already been registered, and hence the input card information may include only the input ID number. In addition, for example, the NFC authentication or the image authentication may be used in a situation in which an upper limit amount of electronic money that can be used or an upper limit amount of electronic money that can be loaded is to be increased.

### [3-9. Other Modification Examples]

For example, the modification examples described above may be combined.

Further, for example, the card C may be an insurance card, a driver's license, a membership card, a student ID card, or another card. The card C to be utilized for the possession authentication may be an electronic card (virtual card) instead of a physical card. Further, for example, when the authentication fails, the determination may be manually performed by an administrator. Further, for example, when the authentication corresponding to a certain card number fails a predetermined number of times, the card number may be restricted so that no further authentication is executed thereon. In this case, the card number may be restricted so that the card number is not registered in the app unless permission is granted by the administrator.

Further, for example, the authentication performed when the card C is to be registered in the app is taken as an example, but the authentication system S can be applied to the authentication performed in various situations. For example, the authentication system S can also be applied to a situation in which the payment using the card C is executed. In this case, in the situation in which payment is required in the electronic commerce service, the NFC unit 33A or the photographing unit 36 may be used so that the input ID number is acquired from the card C to be used for the payment. The authentication system S executes the authentication in the same manner as in the first embodiment or the second embodiment. When the authentication is successful, the payment using the card C may be executed, and when the authentication fails, the payment using the card C may be inhibited from being executed. In addition, for example, the authentication system S may be applied to a situation in which the possession authentication of the card C corresponding to an identification card or another certificate is executed. The authentication system S may be applied to a situation in which the possession authentication of the card C corresponding to an examination card for an online examination is executed.

Further, for example, the case in which the main functions are shared by the business entity server 10 and the administrator server 20 has been described, but each function may be implemented by one computer. Further, for example, the function described as being implemented by the business entity server 10 may be implemented by the administrator server 20. In contrast, the function described as being implemented by the administrator server 20 may be implemented by the business entity server 10. Further, for example, each function may be shared by three or more computers.

## Claims

1. An authentication system, comprising:
logged-in user information acquisition means for acquiring logged-in user information that enables identification of a user who has logged in from a user terminal;
input card information acquisition means for acquiring input card information relating to a card possessed by the user, which has been input from the user terminal through use of reading means or photographing means; and
authentication means for executing authentication based on the logged-in user information and the input card information, and on registered user information and registered card information that are registered in advance.

2. The authentication system according to claim 1,
wherein the logged-in user information is information to be used for login to a first service,
wherein the input card information and the registered card information each include information relating to a second service useable to the user through use of the card,
wherein the registered user information is information to be used for login to the second service, and is the same as registered user information for the first service, and
wherein the authentication is authentication for the first service.

3. The authentication system according to claim 1 or 2,
wherein the card includes:
a first storage area which requires a key for the reading means to read the first storage area; and
a second storage area which is free from requiring the key for the reading means to read the second storage area,
wherein the authentication system further comprises:
fraud degree calculation means for calculating a fraud degree of the user based on an action of the user; and
first determination means for determining a storage area to be used for the authentication from the first storage area and the second storage area based on the fraud degree, and
wherein the input card information acquisition means is configured to:
acquire, when it is determined that the first storage area is to be used, a first piece of input card information, which has been stored in the first storage area, and has been input from the user terminal through use of the reading means; and
acquire, when it is determined that the second storage area is to be used, a second piece of input card information, which has been stored in the second storage area, and has been input from the user terminal through use of the reading means.

4. The authentication system according to any one of claims 1 to 3, further comprising:
fraud degree calculation means for calculating a fraud degree of the user based on an action of the user; and
second determination means for determining means to be used for the authentication from the reading means and the photographing means based on the fraud degree,
wherein the input card information acquisition means is configured to:
acquire, when it is determined that the reading means is to be used, the input card information which has been input from the user terminal through use of the reading means; and
acquire, when it is determined that the photographing means is to be used, the input card information which has been input from the user terminal through use of the photographing means.

5. The authentication system according to any one of claims 1 to 4, further comprising:
fraud degree calculation means for calculating a fraud degree of the user based on an action of the user; and
third determination means for determining a type of information to be used as the input card information among a plurality of types of information contained in the card based on the fraud degree,
wherein the input card information acquisition means is configured to acquire the input card information of the determined type.

6. The authentication system according to any one of claims 1 to 5,
wherein the authentication system is configured to execute a plurality of types of authentication including the authentication, and
wherein the authentication system further comprises fourth determination means for determining a usable range of the card based on a type of the authentication executed by the user.

7. The authentication system according to any one of claims 1 to 6, further comprising telephone authentication means for executing telephone authentication based on a telephone number of the user, which is registered in advance.

8. The authentication system according to claim 7, wherein the telephone authentication means is configured to execute the telephone authentication based on the telephone number registered in a service different from a service relating to the authentication.

9. The authentication system according to any one of claims 1 to 8,
wherein the input card information is an input card image in which the card is shown,
wherein the authentication system further comprises formation determination means for determining whether a paper sheet having an image of the card formed thereon is shown in the input card image, and
wherein the authentication means is configured to execute the authentication further based on a result of the determination obtained by the formation determination means.

10. The authentication system according to any one of claims 1 to 9,
wherein the input card information is an input card image in which the card is shown,
wherein the authentication system further comprises photographing determination means for determining whether the input card image has been generated by the photographing means of the user terminal, and
wherein the authentication means is configured to execute the authentication further based on a result of the determination obtained by the photographing determination means.

11. The authentication system according to any one of claims 1 to 10, further comprising:
a business entity server corresponding to a business entity that provides a service using the card; and
an administrator server corresponding to an administrator that manages the registered user information and the registered card information,
wherein the business entity server includes the authentication means,
wherein the administrator server includes the logged-in user information acquisition means, the input card information acquisition means, and confirmation means for confirming the registered user information and the registered card information corresponding to the logged-in user information and the input card information, respectively, and
wherein the authentication means of the business entity server is configured to execute the authentication by receiving, from the administrator server, a result of the confirmation obtained by the confirmation means.

12. The authentication system according to any one of claims 1 to 10, further comprising:
a business entity server corresponding to a business entity that provides a service using the card; and
an administrator server corresponding to an administrator that manages the registered user information and the registered card information,
wherein the business entity server includes the logged-in user information acquisition means, the input card information acquisition means, and the authentication means, and
wherein the business entity server is configured to receive at least one of the registered user information or the registered card information from the administrator server, and cause the authentication means to execute the authentication based on the at least one of the registered user information or the registered card information that has been received.

13. The authentication system according to any one of claims 1 to 12,
wherein the card is a credit card that allows use of electronic money,
wherein the logged-in user information is information to be used for login to an electronic payment service that allows use of the credit card,
wherein the input card information is information that enables identification of the electronic money,
wherein the registered user information is information for login to another service different from the electronic payment service, and is the same as registered user information for the electronic payment service,
wherein the registered card information is information that enables identification of the electronic money registered in the another service, and
wherein the authentication is authentication for the electronic payment service.

14. The authentication system according to any one of claims 1 to 13, further comprising registration means for executing registration processing relating to the card based on an execution result of the authentication.

15. An authentication method, comprising:
a logged-in user information acquisition step of acquiring logged-in user information that enables identification of a user who has logged in from a user terminal;
an input card information acquisition step of acquiring input card information relating to a card possessed by the user, which has been input from the user terminal through use of reading means or photographing means; and
an authentication step of executing authentication based on the logged-in user information and the input card information, and on registered user information and registered card information that are registered in advance.

16. A program for causing a computer to function as:
logged-in user information acquisition means for acquiring logged-in user information that enables identification of a user who has logged in from a user terminal;
input card information acquisition means for acquiring input card information relating to a card possessed by the user, which has been input from the user terminal through use of reading means or photographing means; and
authentication means for executing authentication based on the logged-in user information and the input card information, and on registered user information and registered card information that are registered in advance.
